# EUROPÄISCHE PATENTSCHRIFT

(11) **EP 4 257 932 B1**
(45) Veröffentlichungstag und Bekanntmachung des Hinweises auf die Patenterteilung: **24.09.2025**
(21) Anmeldenummer: 23166528.2
(22) Anmeldetag: 04.04.2023
(51) Int. Cl.: G01F 1/002, G01B 11/02, G01F 1/20, G01F 1/00, G01F 15/00, G01F 15/06

(54) **AUTOMATISCHE ABSTANDSMESSUNG IM STRÖMUNGSKANAL**
AUTOMATIC DISTANCE MEASUREMENT IN A FLOW CHANNEL
MESURE AUTOMATIQUE DE DISTANCE DANS UN CANAL D'ÉCOULEMENT

(30) Priorität: 07.04.2022 DE 102022108402
(43) Veröffentlichungstag der Anmeldung: 11.10.2023
(73) Patentinhaber: Testo SE & Co. KGaA, 79822 Titisee-Neustadt (DE)
(72) Erfinder: Schott, Stefan, 79235 Oberbergen (DE); Bach, Sebastian, 79874 Breitnau (DE); Kampferbeck, Michael, 79199 Kirchzarten (DE); Eisenkolb, Sarah, 79822 Titisee-Neustadt (DE); Landenberger, Benjamin, 79102 Freiburg (DE)
(74) Vertreter: Mertzlufft-Paufler, Cornelius

(56) Entgegenhaltungen:
- CN-U- 215 573 150
- DE-C1- 4 016 529
- US-A1- 2021 172 816
- US-B1- 6 973 842

## Beschreibung

Die Erfindung betrifft eine Strömungssonde mit einem Messsensor, der an einem distalen Ende eines Schaftes ausgebildet ist.

Die Erfindung betrifft weiter ein Verfahren zur Aufnahme einer ortsabhängigen Messgröße, wobei ein Messsensor in einen auszumessenden, durch eine Begrenzung definierten Messbereich gebracht wird.

Derartige Strömungssonden und Verfahren sind bekannt und dienen zur Aufnahme ortsabhängiger Messgrößen. Sie werden beispielsweise zur Volumenstrommessung in Kanälen, insbesondere Strömungskanälen, verwendet. Hierbei muss die Kanalgeometrie bekannt sein und in die Strömungssonde eingegeben werden. Die Strömungssonde gibt sodann beispielsweise die Positionen vor, an denen mittels einer Messsonde die Messgröße bestimmt werden soll, um beispielsweise ein Messgrößenprofil zu ermitteln oder die Messgröße an einer bestimmten Position zu ermitteln. Die vorgegebenen Messpunkte müssen dann manuell mit der Messsonde, die an einem Schaft montiert sein kann, abgefahren werden. Der Benutzer muss hierbei manuell beispielsweise an dem Schaft ablesen, ob er die Messposition erreicht hat. Diese manuelle Vorgehensweise ist fehleranfällig.

Aus der CN 215 573 150 U ist eine tragbare Doppler-Strömungsgeschwindigkeits- und Strömungsmessvorrichtung bekannt, die zum Bereich der Strömungsmessvorrichtungen gehört und ein Montageteil und ein Messteil umfasst, wobei das Montageteil eine teleskopische Messstange umfasst, das Messteil einen Laser-Breitenmesssensor und einen Doppler-Strömungsgeschwindigkeits- und Wassertiefensensor umfasst und das Messteil am Montageteil angeordnet ist.

Aus der DE 40 16 529 C1 ist ein Durchflussmesser für offene Kanäle bekannt, mit einer in die Flüssigkeit eintauchenden, die Strömungsgeschwindigkeit messenden Strömungssonde, welche an einer Positioniervorrichtung angebracht und gesteuert durch einen Rechner bewegbar ist, wobei die Strömungssonde an zahlreiche Messpunkte bewegbar ist, die in einer quer zum Kanal verlaufenden Messebene verteilt sind und deren Strömungsgeschwindigkeiten gemessen und im Rechner gespeichert werden, der Rechner in einer Kalibrierphase eine mittlere Strömungsgeschwindigkeit vₘ der Messpunkte und eine Bezugströmungsgeschwindigkeit an einer Referenzposition ermittelt, und der Rechner in einer Messphase die Sonde auf die Referenzposition einstellt und anhand der in der Kalibrierphase gewonnenen Beziehung zwischen mittlere Strömungsgeschwindigkeit (vₘ) und Bezugs-Strömungsgeschwindigkeit die aktuelle Gesamt-Strömungsgeschwindigkeit errechnet.

Ähnliche Vorrichtungen sind auch aus der US 6 973 842 B1 und der US 2021/172816 A1 bekannt.

Die Aufgabe der Erfindung ist es, die Gebrauchseigenschaften derartiger Strömungssonden und Verfahren zu verbessern und die Fehleranfälligkeit der Messgrößenbestimmung zu reduzieren.

Zur Lösung der genannten Aufgabe sind erfindungsgemäß die Merkmale des Anspruchs 1 vorgesehen. Insbesondere wird somit zur Lösung der genannten Aufgabe bei Strömungssonden der eingangs beschriebenen Art erfindungsgemäß vorgeschlagen, dass an dem distalen Ende des Schaftes wenigstens ein Abstandssensor angeordnet ist.

Somit kann ein Abstand des distalen Endes des Schaftes von beispielsweise umliegenden Kanal- und/oder Rohrwandungen bestimmt werden. Hieraus kann dann eine Position des distalen Endes des Schaftes bestimmt werden. Da die Messsonde an dem distalen Ende des Schaftes angebracht ist, ist auch deren Position bekannt. Diese Informationen können zur automatischen Bestimmung ortsabhängiger Messgrößen verwendet werden. Hierbei kann beispielsweise durch Abfahren verschiedener Positionen mit dem distalen Ende des Schaftes ein Messgrößenprofil erstellt werden. Es kann aber auch der Benutzer informiert werden, sobald das distale Ende eine vorgegebene Messposition erreicht hat. Das distale Ende kann sich hierbei insbesondere über weniger als 50 %, bevorzugt weniger als 40 % der Länge des Schaftes erstrecken. Die von dem distalen Ende eingenommene Länge des Schaftes kann so gewählt sein, dass sie eine größte Erstreckung insbesondere der Querschnittsfläche des zu untersuchenden Messbereichs erreicht und/oder übersteigt.

Erfindungsgemäß ist der Messsensor dazu eingerichtet, eine Messung in Abhängigkeit von einem mit dem wenigstens einen Abstandssensor gemessenen Abstand vorzunehmen. Alternativ oder zusätzlich kann vorgesehen sein, dass der wenigstens eine Abstandssensor zu einer kontinuierlichen Messung eines Abstands eingerichtet ist.

Somit kann eine von dem Messsensor ausgeführte Messung beispielsweise genau dann ausgelöst werden, wenn eine bestimmte Position des Messsensors innerhalb des zu untersuchenden Bereichs, beispielsweise einem Kanal oder Rohr, erreicht ist. Hierbei kann ein Steuergerät vorgesehen sein, welches die Daten des Messsensors und/oder des wenigstens einen Abstandssensors und/oder der weiteren Sensoren der Strömungssonde verarbeitet und/oder eine Messung des Messsensors in Abhängigkeit von einem mittels des wenigstens einen Abstandssensors bestimmten Abstand auslöst. Mittels der kontinuierlichen Messung eines Abstands ist es möglich, eine kontinuierliche Bewegung des Messsensors innerhalb des zu untersuchenden Bereichs vorzunehmen, während der kontinuierlich Abstände bestimmt werden, und wobei bei Erreichen bestimmter Abstände Messungen ausgelöst werden. Dies ist besonders dann vorteilhaft, wenn zur Erfüllung bestimmter Richtlinienvorgaben Messungen in bestimmten Abständen vorgenommen werden sollen. Hierbei können alternativ oder zusätzlich Messungen in bestimmten Zeitabständen automatisch und/oder manuell vorgenommen werden. Die Abstände oder Zeitabstände, anhand derer eine Messung ausgelöst werden soll, können beispielsweise von einem Nutzer vorgebbar sein.

Erfindungsgemäß ist ein Beschleunigungssensor vorgesehen. Der Beschleunigungssensor ist hierbei an dem distalen Ende angeordnet.

Somit ist die Orientierung der Sonde im Gravitationsfeld bestimmbar. Zusammen mit den Messwerten des wenigstens einen Abstandssensors ist somit eine genauere Position der Strömungssonde, insbesondere seines distalen Endes, bestimmbar, beispielsweise in Form einer zuverlässigen Höhenkoordinate in einem Kanal- und/oder Rohrquerschnitt.

Die ortsabhängige Messgröße kann eine Strömungsgeschwindigkeit sein. Somit sind beispielsweise Volumenstrommessungen in Kanälen möglich. Es kann beispielsweise ein Volumenstromprofil über die Querschnittsfläche des Kanals bestimmt werden.

Bei einer vorteilhaften Ausgestaltung kann vorgesehen sein, dass der Abstandssensor ein Laser-Abstandssensor ist.

Somit kann der Abstand auf optischem Wege bestimmt werden. Dies ist kontaktlos möglich und wird von beispielsweise einer Luftströmung nicht beeinflusst. Der Abstand kann auch besonders genau ermittelt werden. Der ermittelte Abstand kann elektronisch ausgelesen und weiterverarbeitet werden.

Bei einer vorteilhaften Ausgestaltung kann vorgesehen sein, dass wenigstens zwei Abstandssensoren, die in unterschiedliche Richtungen ausgerichtet sind, an dem distalen Ende angeordnet sind.

Somit können Abstände in mehrere Richtungen bestimmt werden. Es ist damit möglich, eine zweidimensionale Position zu bestimmen. Beispielsweise kann die Position des distalen Endes innerhalb der Querschnittsfläche eines Kanals bestimmt werden.

Bei einer vorteilhaften Ausgestaltung kann vorgesehen sein, dass die Strömungssonde einen Signalgeber zur Ausgabe eines Signals aufweist. Das Signal kann beispielsweise ein optisches und/oder ein akustisches Signal sein. Zusätzlich kann vorgesehen sein, dass das Signal in Abhängigkeit von einem mit dem wenigstens einen Abstandssensor bestimmten Abstand ausgebbar ist.

Bei dem Signalgeber kann es sich beispielsweise um ein Leuchtelement und/oder einen Lautsprecher handeln. Somit kann ein Nutzer informiert werden, wenn die Strömungssonde bzw. der Messsensor eine vordefinierte Position erreicht hat. Der Nutzer kann dann beispielsweise die Strömungssonde in der aktuellen Position halten, um eine ausreichend lange Messung aufzunehmen. Sind die Messungen nur sehr kurz, kann der Nutzer die Signale als Bestätigungssignal auffassen, und die Strömungssonde weiter bewegen. Ein erreichen einer vordefinierten Position kann beispielsweise mittels des wenigstens einen Abstandssensors detektierbar sein.

Alternativ oder zusätzlich sind zur Lösung der genannten Aufgabe erfindungsgemäß die Merkmale des nebengeordneten, auf ein Verfahren zur Aufnahme einer ortsabhängigen Messgröße gerichteten Anspruchs vorgesehen. Insbesondere wird somit zur Lösung der genannten Aufgabe bei Verfahren der eingangs beschriebenen Art erfindungsgemäß vorgeschlagen, dass mit dem Messsensor wenigstens ein Abstandssensor in den Messbereich gebracht wird, mit welchem wenigstens ein Abstand des Messsensors zu der Begrenzung zum Zeitpunkt einer Messung aufgenommen wird. Die Messung, deren Zeitpunkt relevant ist, ist hierbei die mittels des Messsensors ausgeführte Messung. Zusätzlich kann vorgesehen sein, dass der Abstand kontinuierlich aufgenommen wird.

Somit kann eine automatische und insbesondere kontinuierliche Bestimmung einer Position des Messsensors erfolgen. Diese Position kann zusammen mit einem jeweiligen Messwert aufgenommen, gespeichert und/oder weiterverarbeitet werden.

Erfindungsgemäß ist vorgesehen, dass eine Ausrichtung im Gravitationsfeld mittels eines Beschleunigungssensors bestimmt wird. Hierbei handelt es sich um die Ausrichtung des Messsensors und des wenigstens einen Abstandssensors. Der Beschleunigungssensor ist hierbei ortsfest mit dem Messsensor und dem wenigstens einen Abstandssensor verbunden.

Somit können Messwerte des Beschleunigungssensors erfasst werden, die insbesondere im Zusammenspiel mit Messwerten des wenigstens einen Abstandssensors die Genauigkeit der Positionsbestimmung der Strömungssonde, insbesondere seines distalen Endes bzw. des Messsensors, erhöhen.

Bei einer vorteilhaften Ausgestaltung kann vorgesehen sein, dass die mittels des Beschleunigungssensors bestimmte Ausrichtung zur Information eines Benutzers über die Ausrichtung verwendet wird. Hierbei kann es sich um die Information des Benutzers über eine unzulässige Ausrichtung handeln. Alternativ oder zusätzlich kann vorgesehen sein, dass die Ausrichtung im Zeitpunkt einer Messung bestimmt wird. Alternativ oder zusätzlich kann vorgesehen sein, dass Messwerte des Messsensors um eine Abweichung der Ausrichtung von einem Ideal korrigiert werden.

Auf diese Weise kann der Benutzer bei der Ausrichtung der Strömungssonde, insbesondere in einem nicht einsehbaren Messbereich, unterstützt werden. Der Benutzer kann beispielsweise informiert werden, wenn der Messsensor nicht optimal ausgerichtet ist und unzuverlässige Daten ausgeben würde. Der Nutzer kann auch darüber informiert werden, dass der Messsensor eine vorab festgelegte Position erreicht hat, woraufhin automatisch oder manuell eine Messung ausgelöst werden kann. Wird die Ausrichtung im Zeitpunkt einer Messung bestimmt, kann diese Information zum Zwecke der Dokumentation gespeichert und/oder in einem späteren Verfahrensschritt verwendet werden. Beispielsweise können Messwerte des Messsensors um eine Abweichung der Ausrichtung von einem Ideal korrigiert werden. Hierbei kann beispielsweise die im Zeitpunkt der Messung bestimmte Ausrichtung herangezogen werden. Als Ideal kann beispielsweise eine bestimmte Ausrichtung des Messsensors relativ zur vorherrschenden Strömung im Messbereich definiert sein. Abweichungen der tatsächlichen Ausrichtung von dem Ideal können beispielsweise bis zu einem bestimmten Grad auf Grundlage der tatsächlich bestimmten Ausrichtung korrigierbar sein. Überschreitet die Abweichung der Ausrichtung von dem Ideal ein ausreichend korrigierbares Maß, kann der Benutzer aktiv informiert werden, um die Ausrichtung des Messsensors zu ändern.

Bei einer vorteilhaften Ausgestaltung kann vorgesehen sein, dass Messwerte des Messsensors mit zugehörigem wenigstens einen Abstand ausgegeben werden. Alternativ oder zusätzlich kann vorgesehen sein, dass Messwerte des Messsensors mit zugehöriger Ausrichtung ausgegeben werden.

Somit kann die Information über den wenigstens einen Abstand bzw. die Ausrichtung, insbesondere die bereits beschriebene Ausrichtung, beispielsweise elektronisch weiterverarbeitet werden. Messwerte können auch mit weiteren, zugehörigen Parametern, wie etwa der Dauer einer Messung, ausgegeben werden. Die Ausgabe der Messwerte, insbesondere mit zugehörigen Abständen, Ausrichtungen und/oder Dauern, kann beispielsweise in eine Speichereinheit zur Dokumentation erfolgen.

Bei einer vorteilhaften Ausgestaltung kann vorgesehen sein, dass der Messbereich zweidimensional oder dreidimensional ist.

Somit können ortsabhängige Messwerte an verschiedenen Positionen innerhalb des Messbereichs bestimmt werden. Insbesondere können zwei- und/oder dreidimensionale Messgrößenprofile bestimmt werden.

Bei einer vorteilhaften Ausgestaltung kann vorgesehen sein, dass die Messgröße eine Strömungsgeschwindigkeit ist.

Somit können die zuvor genannten Vorteile bei Messungen von Strömungsgeschwindigkeiten benutzt werden. Insbesondere können ein-, zwei- und/oder dreidimensionale Strömungsprofile erstellt werden. Dies ermöglicht auch eine automatische, ortsaufgelöste Volumenstrommessung in Kanälen.

Bei einer vorteilhaften Ausgestaltung kann vorgesehen sein, dass der Messsensor durch eine vorzugsweise auf eine Größe des Messsensors abgestimmte Öffnung in der Begrenzung in den Messbereich eingeführt wird.

Somit kann die Öffnung, durch die der Messsensor in den Messbereich eingeführt wird, so klein und/oder groß wie notwendig gehalten werden. Die Öffnung kann gerade so groß gewählt werden, dass sie nach Einführen des Messsensors gerade so sehr nach außen abgedichtet ist, dass ein Bewegen des Messsensors über den Messbereich möglich ist. Somit können externe Störungen des Messbereichs und der Messergebnisse verringert und/oder vermieden werden.

Erfindungsgemäß ist vorgesehen, dass aus Messwerten des wenigstens einen Abstandssensors und des Beschleunigungssensors eine geometrische Größe bestimmt wird, bei der es sich um die Form und die Größe des Messbereichs handelt. Zusätzlich ist vorgesehen, dass aus den Messwerten ein Messort bestimmt wird.

Somit ist eine Ausmessung des Messbereichs möglich. Beispielsweise können Form und/oder Größe des Messbereichs auch dann bestimmt werden, wenn ein zu untersuchender Kanal und/oder zu untersuchendes Rohr eine von einer Außenabmessung abweichende Innenabmessung, beispielsweise aufgrund einer vorhandenen Isolierung, aufweist. Mittels des wenigstens einen Abstandssensors und/oder des Beschleunigungssensors bestimmbare Abmessungen können auch für verschiedene Messbereiche vorbestimmt sein, so dass ein Messort bestimmbar ist. Hierbei kann es sich beispielsweise um einen bestimmten Zugang in einen Kanal und/oder ein Rohr handeln. Alternativ oder zusätzlich können hierbei auch bestimmbare Abmessungen außerhalb des Messbereichs herangezogen werden, die beispielsweise während eines Einführens der Strömungssonde in den Messbereich bestimmt werden.

Erfindungsgemäß ist vorgesehen, dass eine Messung durch den Messsensor in Abhängigkeit von einem mittels des wenigstens einen Abstandssensors bestimmten Abstand erfolgt. Zusätzlich ist vorgesehen, dass eine Messung durch den Messsensor in Abhängigkeit von einer ermittelten Position des Messsensors in dem Messbereich erfolgt.

Somit kann eine Messung mittels des Messsensors genau dann ausgelöst werden, wenn der gemessene Abstand einem zuvor bestimmten Abstand entspricht. Eine Messung mittels des Messsensors kann auch genau dann ausgelöst werden, wenn eine ermittelte Position einer zuvor bestimmten Position entspricht. Derartige zuvor bestimmte Positionen und Abstände können sich beispielsweise aus Richtlinien ergeben, wonach Messwerte in bestimmten Abständen bzw. an bestimmten Positionen zu bestimmen sind. Es ist auch möglich, zunächst mittels des wenigstens einen Abstandssensors, insbesondere durch beispielsweise händisches Bewegen des Abstandssensors durch den Messbereich, eine Geometrie des Messbereichs zu bestimmen und anschließend die Abstände bzw. Positionen festzulegen, an denen eine Messung erfolgen soll. Alternativ oder zusätzlich können Messungen in bestimmten Zeitabständen ausgelöst werden. Die Messungen können beispielsweise mittels zugehörigem gemessenem wenigstens einen Abstand bzw. ermittelter Position des Messsensors oder mit zugehöriger Messdauer ausgegeben werden.

Erfindungsgemäß ist vorgesehen, dass bei dem Verfahren eine erfindungsgemäße Strömungssonde verwendet wird.

Somit sind die Vorteile einer erfindungsgemäßen Strömungssonde bei erfindungsgemäßen Verfahren nutzbar.

Erfindungsgemäß ist vorgesehen, dass eine Überdeckung des Messbereichs durch die Strömungssonde bestimmt wird. Zusätzlich ist vorgesehen, dass Messwerte des Messsensors um die Überdeckung des Messbereichs korrigiert werden.

Ein Einführen der Strömungssonde in den Messbereich ist mit einer Überdeckung des Messbereichs durch die Strömungssonde verbunden. Bei der Überdeckung kann es sich beispielsweise um die Projektion insbesondere der Außenabmessungen der Strömungssonde auf die vorzugsweise orthogonal zur Strömungsrichtung stehende Querschnittsfläche des Messbereichs handeln. Diese Überdeckung kann insbesondere bei vergleichsweise kleinen Messbereichen, beispielsweise in Kanälen und/oder Rohren kleiner Querschnittsfläche, zu Strömungsveränderungen führen. So können Abweichungen der ermittelten Messwerte von den vorliegenden Strömungsverhältnissen auftreten und/oder vergrößert werden. Die Ermittlung der Überdeckung des Messbereichs durch die Strömungssonde, die erfindungsgemäß auf Grundlage der Messwerte des wenigstens einen Abstandssensors und des Beschleunigungssensors erfolgt, dient zur Korrektur der Messwerte des Messsensors, um genauere Messergebnisse zu produzieren.

Bei einer vorteilhaften Ausgestaltung einer erfindungsgemäßen Strömungssonde kann vorgesehen sein, dass die Strömungssonde dazu eingerichtet ist, ein erfindungsgemäßes Verfahren auszuführen.

Somit können die Vorteile erfindungsgemäßer Verfahren mit erfindungsgemäßen Messgeräten genutzt werden.

Die Erfindung wird nun anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt:

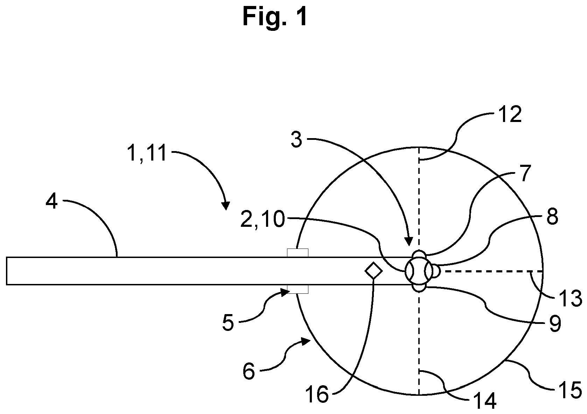

- Figur 1: eine schematische Darstellung einer erfindungsgemäßen Strömungssonde.

Figur 1 zeigt eine schematische Darstellung eines als erfindungsgemäße Strömungssonde 11 ausgebildeten Messgeräts 1 mit einem Messsensor 2, der an einem distalen Ende 3 eines Schaftes 4 ausgebildet ist. Der Schaft 4 des Messgeräts 1 ist mit seinem distalen Ende 3 voran in durch eine auf eine Größe des Messsensors 2 abgestimmte Öffnung 5 in einen Messbereich 6 eingeführt. An dem distalen Ende 3 sind außerdem Abstandssensoren 7, 8, 9 ausgebildet und in verschiedene Richtungen ausgerichtet. Der Messsensor 2 ist hierbei ein Volumenstromsensor 10. Die Messgröße ist eine Strömungsgeschwindigkeit. Die Abstandssensoren 7, 8, 9, bei denen es sich um Laser-Abstandssensoren handelt, ermitteln die Abstände 12, 13, 14 des distalen Endes 3 zu der Begrenzung 15 des Messbereichs 6. Somit können die ermittelten Abstände bzw. eine daraus berechnete Position des distalen Endes 3 des Schaftes 4 und damit auch des Messsensors 2 zusammen mit den jeweiligen Messwerten aufgenommen und/oder ausgegeben werden.

In diesem Fall ist der Messbereich 6 außerdem mehrdimensional. Ferner ist an dem distalen Ende 3 ein Beschleunigungssensor 16 angeordnet. Mittels des Messgeräts 1 ist es möglich, eine Messung in Abhängigkeit von einem mit dem wenigstens einen Abstandssensor 7, 8, 9 gemessenen Abstand 12, 13, 14 vorzunehmen. Der wenigstens eine Abstandssensor 7, 8, 9 kann hierbei zu einer kontinuierlichen Messung eines Abstands 12, 13, 14 eingerichtet sein. Das Messgerät 1 weist einen nicht näher dargestellten Signalgeber zur Ausgabe eines optischen und akustischen Signals auf, wobei das Signal in Abhängigkeit von einem mit dem wenigstens einen Abstandssensor 7, 8, 9 bestimmten Abstand 12, 13, 14 ausgebbar ist. Bei dem Signalgeber handelt es sich um eine nicht näher gezeigte Kombination eines Leuchtelements mit einem Lautsprecher.

Das dargestellte Messgerät 1 ist zur Ausführung eines erfindungsgemäßen Verfahrens geeignet. Hierbei wird mit dem Messsensor 2 wenigstens ein Abstandssensor 7, 8, 9 in den zweidimensionalen oder dreidimensionalen Messbereich 6 eingebracht. Die Messgröße ist hierbei eine Strömungsgeschwindigkeit. Mit den Abstandssensoren 7, 8, 9 wird wenigstens ein Abstand 12, 13, 14 des Messsensors 2 zu der Begrenzung 15 zum Zeitpunkt der Messung, und zwar sogar kontinuierlich, aufgenommen. Eine Ausrichtung des Messsensors 2 und der Abstandssensoren 7, 8, 9 im Gravitationsfeld wird mittels des ortsfest mit dem Messsensor 2 und den Abstandssensoren 7, 8, 9 verbundenen Beschleunigungssensor 16 bestimmt. Die mittels des Beschleunigungssensors 16 bestimmte Ausrichtung wird zur Information eines Benutzers über die Ausrichtung, beispielsweise eine unzulässige Ausrichtung, verwendet und im Zeitpunkt einer Messung bestimmt. Messwerte des Messsensors 2 werden um eine Abweichung der Ausrichtung von einem Ideal korrigiert und mit zugehörigen Abständen 12, 13, 14 sowie zugehöriger Ausrichtung ausgegeben. Aus Messwerten des wenigstens einen Abstandssensors 7, 8, 9 und des Beschleunigungssensors 16 wird eine geometrische Größe, nämlich die Form und die Größe des Messbereichs 6, sowie ein Messort bestimmt. Die Messung durch den Messsensor 2 erfolgt in Abhängigkeit von einem mittels des wenigstens einen Abstandssensor 7, 8, 9 aufgenommenen Abstand 12, 13, 14 und in Abhängigkeit von einer ermittelten Position des Messsensors 2 in dem Messbereich 6. Hierbei wird ein optisches und akustisches Signal ausgegeben, wenn der mittels des wenigstens einen Abstandssensors 7, 8, 9 bestimmte Abstand 12, 13, 14 mit einem zuvor festgelegten Abstand übereinstimmt und wenn die ermittelte Position des Messsensors 2 mit einer zuvor festgelegten Position übereinstimmt. Die Messwerte des Messsensors 2 werden außerdem um eine Überdeckung des Messbereichs 6 durch das Messgerät 1 korrigiert.

Es wird somit vorgeschlagen, bei Messgeräten 1 mit Messsensoren 2 an einem distalen Ende 3 eines Schaftes 4 an diesem distalen Ende 3 ebenfalls wenigstens einen Abstandssensor 7, 8, 9 und/oder einen Beschleunigungssensor 16 auszubilden, um eine automatische Abstandsmessung und/oder Bestimmung der Position und/oder der Ausrichtung des Messsensors 2 innerhalb eines Messbereichs 6 und somit die Aufnahme ortsaufgelöster Messwerte zu ermöglichen (vgl. Fig. 1).

### Bezugszeichenliste

- 1: Messgerät
- 2: Messsensor
- 3: distales Ende
- 4: Schaft
- 5: Öffnung
- 6: Messbereich
- 7: Abstandssensor
- 8: Abstandssensor
- 9: Abstandssensor
- 10: Volumenstromsensor
- 11: Strömungssonde
- 12: Abstand
- 13: Abstand
- 14: Abstand
- 15: Begrenzung
- 16: Beschleunigungssensor

## Patentansprüche

1. Strömungssonde (11), mit einem Messsensor (2), der an einem distalen Ende (3) eines Schaftes (4) ausgebildet ist, wobei an dem distalen Ende (3) wenigstens ein Abstandssensor (7, 8, 9) angeordnet ist, **dadurch gekennzeichnet, dass** ein Beschleunigungssensor (16) vorgesehen und an dem distalen Ende (3) angeordnet ist, dass aus Messwerten des wenigstens einen Abstandssensors (7, 8, 9) und des Beschleunigungssensors (16) eine geometrische Größe, die Form und die Größe eines Messbereichs (6), und ein Messort des Messsensors in einem Messbereich (6) bestimmt wird, dass der Messsensor (2) dazu eingerichtet ist, eine Messung in Abhängigkeit von einem mit dem wenigstens einen Abstandssensor (7, 8, 9) gemessenen Abstand (12, 13, 14) und in Abhängigkeit von einer ermittelten Position des Messsensors (2) in dem Messbereich (6) vorzunehmen, dass eine Überdeckung des Messbereichs (6) durch die Strömungssonde (11) auf Grundlage der Messwerte des wenigstens einen Abstandssensors (7, 8, 9) und des Beschleunigungssensors (16) bestimmt wird, und dass Messwerte des Messsensors (2) um die Überdeckung des Messbereichs (6) korrigiert werden.

2. Strömungssonde (11) nach Anspruch 1, **dadurch gekennzeichnet, dass** der wenigstens eine Abstandssensor (7, 8, 9) zu einer kontinuierlichen Messung eines Abstands (12, 13, 14) eingerichtet ist.

3. Strömungssonde (11) nach einem der vorangehenden Ansprüche, **dadurch gekennzeichnet, dass** der Abstandssensor (7, 8, 9) ein Laser-Abstandssensor ist.

4. Strömungssonde (11) nach einem der vorangehenden Ansprüche, **dadurch gekennzeichnet, dass** wenigstens zwei, vorzugsweise drei, Abstandssensoren (7, 8, 9), die in unterschiedliche Richtungen ausgerichtet sind, an dem distalen Ende (3) angeordnet sind.

5. Strömungssonde (11) nach einem der vorangehenden Ansprüche, **dadurch gekennzeichnet, dass** die Strömungssonde (11) einen Signalgeber zur Ausgabe eines vorzugsweise optischen und/oder akustischen Signals aufweist, insbesondere wobei das Signal in Abhängigkeit von einem mit dem wenigstens einen Abstandssensor (7, 8, 9) bestimmten Abstand (12, 13, 14) ausgebbar ist.

6. Verfahren zur Aufnahme einer ortsabhängigen Messgröße, wobei bei dem Verfahren eine Strömungssonde nach einem der Ansprüche 1 bis 5 verwendet wird, wobei der Messsensor (2) in einen auszumessenden, durch eine Begrenzung (15) definierten Messbereich (6) gebracht wird, wobei mit dem Messsensor (2) wenigstens ein Abstandssensor (7, 8, 9) in den Messbereich (6) gebracht wird, mit welchen wenigstens ein Abstand (12, 13, 14) des Messsensors (2) zu der Begrenzung (15) zum Zeitpunkt einer Messung, insbesondere kontinuierlich, aufgenommen wird, **dadurch gekennzeichnet, dass** eine Ausrichtung des Messsensors (2) und des wenigstens einen Abstandssensors (7, 8, 9) im Gravitationsfeld mittels eines ortsfest mit dem Messsensor (2) und dem wenigstens einen Abstandssensor (7, 8, 9) verbundenen Beschleunigungssensors (16) bestimmt wird, dass aus Messwerten des wenigstens einen Abstandssensors (7, 8, 9) und des Beschleunigungssensors (16) eine geometrische Größe, die Form und die Größe des Messbereichs (6), und ein Messort des Messsensors (2) in dem Messbereich (6) bestimmt wird, dass eine Messung in Abhängigkeit von einem mit dem wenigstens einen Abstandssensor (7, 8, 9) gemessenen Abstand (12, 13, 14) und in Abhängigkeit von einer ermittelten Position des Messsensors (2) in dem Messbereich (6) erfolgt, dass eine Überdeckung des Messbereichs (6) durch die Strömungssonde (11) auf Grundlage der Messwerte des wenigstens einen Abstandssensors (7, 8, 9) und des Beschleunigungssensors (16) bestimmt wird, und dass Messwerte des Messsensors (2) um die Überdeckung des Messbereichs (6) korrigiert werden.

7. Verfahren nach Anspruch 6, **dadurch gekennzeichnet, dass** die mittels des Beschleunigungssensors (16) bestimmte Ausrichtung zur Information eines Benutzers über die Ausrichtung, insbesondere über eine unzulässige Ausrichtung, verwendet wird und/oder im Zeitpunkt einer Messung bestimmt wird und/oder dass Messwerte des Messsensors (2) um eine Abweichung der Ausrichtung von einem Ideal korrigiert werden.

8. Verfahren nach einem der Ansprüche 6 oder 7, **dadurch gekennzeichnet, dass** Messwerte des Messsensors (2) mit zugehörigem wenigstens einen Abstand (12, 13, 14) und/oder zugehöriger Ausrichtung ausgegeben werden und/oder dass der Messbereich (6) zweidimensional oder dreidimensional ist und/oder dass die Messgröße eine Strömungsgeschwindigkeit ist.

9. Verfahren nach einem der Ansprüche 6 bis 8, **dadurch gekennzeichnet, dass** der Messsensor (2) durch eine vorzugsweise auf eine Größe des Messsensors (2) abgestimmte Öffnung (5) in der Begrenzung (15) in den Messbereich (6) eingeführt wird.

10. Verfahren nach einem der Ansprüche 6 bis 9, **dadurch gekennzeichnet, dass** ein vorzugsweise optisches und/oder akustisches Signal ausgegeben wird, wenn der mittels des wenigstens einen Abstandssensors (7, 8, 9) bestimmte Abstand (12, 13, 14) mit einem zuvor festgelegten Abstand übereinstimmt und/oder wenn die ermittelte Position des Messsensors (2) mit einer zuvor festgelegten Position übereinstimmt.

## Claims

1. Flow probe (11), having a measuring sensor (2) formed at a distal end (3) of a shaft (4), wherein at least one distance sensor (7, 8, 9) is arranged at the distal end (3), **characterized in that** an acceleration sensor (16) is provided and arranged at the distal end (3), **in that** a geometric variable, the shape and the size of a measuring region (6) and a measuring location of the measuring sensor in a measuring region (6) is determined, **in that** the measuring sensor (2) is designed to perform a measurement as a function of a distance (12, 13, 14) measured with the at least one distance sensor (7, 8, 9) and as a function of a determined position of the measuring sensor (2) in the measuring region (6), **in that** an overlap of the measuring region (6) by the flow probe (11) is determined on the basis of the measured values of the at least one distance sensor (7, 8, 9) and the acceleration sensor (16), and **in that** measured values of the measuring sensor (2) are corrected by the overlap of the measuring region (6).

2. Flow probe (11) according to claim 1, **characterized in that** the at least one distance sensor (7, 8, 9) is designed for continuous measurement of a distance (12, 13, 14).

3. Flow probe (11) according to one of the preceding claims, **characterized in that** the distance sensor (7, 8, 9) is a laser distance sensor.

4. Flow probe (11) according to one of the preceding claims, **characterized in that** at least two, preferably three, distance sensors (7, 8, 9) which are aligned in different directions are arranged at the distal end (3).

5. Flow probe (11) according to one of the preceding claims, **characterized in that** the flow probe (11) has a signal transmitter for outputting a preferably optical and/or acoustic signal, in particular wherein the signal can be output at a predetermined distance (12, 13, 14) determined by the at least one distance sensor (7, 8, 9).

6. Method for recording a location-dependent measured variable, wherein a flow probe according to one of claims 1 to 5 is used, wherein the measuring sensor (2) is brought into a measuring region (6) to be measured, defined by a boundary (15), wherein at least one distance sensor (7, 8, 9) is brought into the measuring region (6), with which at least one distance (12, 13, 14) of the measuring sensor (2) to the boundary (15) is recorded at the time of a measurement, in particular continuously, **characterized in that** an alignment of the measuring sensor (2) and the at least one distance sensor (7, 8, 9) in the gravitational field is determined by means of an acceleration sensor (16) connected in a fixed manner to the measuring sensor (2) and the at least one distance sensor (7, 8, 9), **in that** a geometric variable, the shape and the size of the measuring region (6), and a measuring location of the measuring sensor (2) in the measuring region (6) are determined from measured values of the at least one distance sensor (7, 8, 9) and the acceleration sensor (16), **in that** a measurement is performed as a function of a distance (12, 13, 14) measured with the at least one distance sensor (7, 8, 9) and as a function of a determined position of the measuring sensor (2) in the measuring region (6), **in that** an overlap of the measuring region (6) by the flow probe (11) is determined on the basis of the measured values of the at least one distance sensor (7, 8, 9) and the acceleration sensor (16), and **in that** the measured values of the measuring sensor (2) are corrected by the overlap of the measuring region (6).

7. Method according to claim 6, **characterized in that** the alignment determined by means of the acceleration sensor (16) is used to inform a user about the alignment, in particular about an impermissible alignment, and/or is determined at the time of a measurement, and/or **in that** measured values of the measuring sensor (2) are corrected by a deviation of the alignment from an ideal.

8. Method according to one of claims 6 or 7, **characterized in that** measured values of the measuring sensor (2) are output with at least one associated distance (12, 13, 14) and/or associated orientation, and/or **in that** the measuring region (6) is two-dimensional or three-dimensional, and/or **in that** the measured variable is a flow velocity.

9. Method according to one of claims 6 to 8, **characterized in that** the measuring sensor (2) is introduced into the measuring region (6) through an opening (5) in the boundary (15), which is preferably adapted to a size of the measuring sensor (2).

10. Method according to one of claims 6 to 9, **characterized in that** a preferably optical and/or acoustic signal is emitted when the distance (12, 13, 14) determined by means of the at least one distance sensor (7, 8, 9) corresponds to a previously defined distance and/or when the determined position of the measuring sensor (2) corresponds to a previously defined position.

## Revendications

1. Sonde d'écoulement (11) comprenant un capteur de mesure (2) formé à une extrémité distale (3) d'une tige (4), au moins un capteur de distance (7, 8, 9) étant disposé à l'extrémité distale (3), **caractérisée en ce qu'**un capteur d'accélération (16) est prévu et disposé à l'extrémité distale (3), **en ce qu'**à partir des valeurs de mesure dudit au moins un capteur de distance (7, 8, 9) et du capteur d'accélération (16), une grandeur géométrique, la forme et la taille d'une zone de mesure (6) et un emplacement de mesure du capteur de mesure dans une zone de mesure (6) sont déterminés, **en ce que** le capteur de mesure (2) est conçu pour effectuer une mesure en fonction d'une distance (12, 13, 14) mesurée avec ledit au moins un capteur de distance (7, 8, 9) et en fonction d'une position déterminée du capteur de mesure (2) dans la zone de mesure (6), **en ce qu'**un recouvrement de la zone de mesure (6) par la sonde d'écoulement (11) est déterminé sur la base des valeurs de mesure dudit au moins un capteur de distance (7, 8, 9) et du capteur d'accélération (16), et **en ce que** les valeurs de mesure du capteur de mesure (2) sont corrigées en fonction du recouvrement de la zone de mesure (6).

2. Sonde d'écoulement (11) selon la revendication 1, **caractérisée en ce que** ledit au moins un capteur de distance (7, 8, 9) est conçu pour mesurer en continu une distance (12, 13, 14).

3. Sonde d'écoulement (11) selon l'une des revendications précédentes, **caractérisée en ce que** le capteur de distance (7, 8, 9) est un capteur de distance laser.

4. Sonde d'écoulement (11) selon l'une des revendications précédentes, **caractérisée en ce qu'**au moins deux, de préférence trois capteurs de distance (7, 8, 9) orientés dans des directions différentes sont disposés à l'extrémité distale (3).

5. Sonde d'écoulement (11) selon l'une des revendications précédentes, **caractérisée en ce que** la sonde d'écoulement (11) présente un émetteur de signaux pour émettre un signal de préférence optique et/ou acoustique, le signal pouvant en particulier être émis en fonction d'une distance (12, 13, 14) déterminée avec ledit au moins un capteur de distance (7, 8, 9).

6. Procédé pour enregistrer une grandeur de mesure dépendante de la position, dans lequel on utilise une sonde d'écoulement selon l'une des revendications 1 à 5, le capteur de mesure (2) étant amené dans une zone de mesure (6) à mesurer, définie par une délimitation (15), au moins un capteur de distance (7, 8, 9) étant amené dans la zone de mesure (6) avec le capteur de mesure (2), à l'aide desquels au moins une distance (12, 13, 14) entre le capteur de mesure (2) et la délimitation (15) est enregistrée au moment d'une mesure, en particulier de manière continue, **caractérisé en ce qu'**une orientation du capteur de mesure (2) et dudit au moins un capteur de distance (7, 8, 9) dans le champ gravitationnel est déterminée au moyen d'un capteur d'accélération (16) relié de manière fixe au capteur de mesure (2) et audit au moins un capteur de distance (7, 8, 9), **en ce qu'**à partir des valeurs de mesure dudit au moins un capteur de distance (7, 8, 9) et du capteur d'accélération (16), une grandeur géométrique, la forme et la taille de la zone de mesure (6) et un emplacement de mesure du capteur de mesure (2) dans la zone de mesure (6) sont déterminés, **en ce qu'**une mesure est effectuée en fonction d'une distance (12, 13, 14) mesurée avec ledit au moins un capteur de distance (7, 8, 9) et en fonction d'une position déterminée du capteur de mesure (2) dans la zone de mesure (6), **en ce qu'**un recouvrement de la zone de mesure (6) par la sonde d'écoulement (11) est déterminé sur la base des valeurs de mesure dudit au moins un capteur de distance (7, 8, 9) et du capteur d'accélération (16), et **en ce que** les valeurs de mesure du capteur de mesure (2) sont corrigées en fonction du recouvrement de la zone de mesure (6).

7. Procédé selon la revendication 6, **caractérisé en ce que** l'orientation déterminée au moyen du capteur d'accélération (16) est utilisée et/ou déterminée au moment d'une mesure pour informer un utilisateur de l'orientation, en particulier d'une orientation non autorisée, et/ou **en ce que** les valeurs de mesure du capteur de mesure (2) sont corrigées en fonction de l'orientation par rapport à une valeur idéale.

8. Procédé selon l'une des revendications 6 ou 7, **caractérisé en ce que** les valeurs de mesure du capteur de mesure (2) sont émises avec au moins une distance (12, 13, 14) associée et/ou une orientation associée, et/ou **en ce que** la zone de mesure (6) est bidimensionnelle ou tridimensionnelle, et/ou **en ce que** la grandeur de mesure est une vitesse d'écoulement.

9. Procédé selon l'une des revendications 6 à 8, **caractérisé en ce que** le capteur de mesure (2) est introduit dans la zone de mesure (6) par une ouverture (5) dans la délimitation (15), de préférence adaptée à une taille du capteur de mesure (2).

10. Procédé selon l'une des revendications 6 à 9, **caractérisé en ce qu'**un signal de préférence optique et/ou acoustique est émis lorsque la distance déterminée au moyen dudit au moins un capteur de distance (7, 8, 9) correspond à une distance prédéfinie et/ou lorsque la position déterminée du capteur de mesure (2) correspond à une position prédéfinie.
